# EUROPEAN PATENT SPECIFICATION

(11) **EP 2 746 112 B1**
(45) Date of publication and mention of the grant of the patent: **26.10.2016**
(21) Application number: 12197805.0
(22) Date of filing: 18.12.2012
(51) Int. Cl.: B60R 21/207, B60R 21/237

(54) **An airbag unit**
Airbageinheit
Unité d'airbag

(43) Date of publication of application: 25.06.2014
(73) Proprietor: Autoliv Development AB, 447 83 Vårgårda (SE)
(72) Inventor: Warm, Annika, SE-44734 Vårgårda (SE); Berntsson, Mats, SE-41461 Göteborg (SE); Sandinge, Pär, SE-44195 Alingsås (SE)
(74) Representative: Parry, Simon James

(56) References cited:
- EP-A1- 2 567 870
- WO-A1-2007/048527
- WO-A1-2010/007055
- GB-A- 2 397 047

## Description

The present invention relates to a vehicle seat with an airbag unit.

It is known to provide motor vehicle seats with one or more airbags configured so that the airbags may be inflated in a side impact crash situation involving the motor vehicle, in order to provide lateral protection to an occupant of the seat. A typical arrangement of this general type comprises an airbag unit in the form of a module mounted to the backrest of the seat, the module being arranged so that the airbag is inflated in a forwards direction relative to the backrest, such that the airbag is deployed to the side of the seat occupant, between the occupant and the side panel or adjacent door of the vehicle.

In conventional side airbag arrangements of the general type proposed above, the side airbag module of the seat is typically mounted on the outside of the backrest frame, inside the upholstery of the seat. However, with such arrangements there can often be a significant distance separating an occupant of the seat and the airbag during early stages of the deployment of the airbag. It has been found that such a situation can allow the occupant's torso, which moves relative to the seat in the event of side impact crash by virtue of its inertia, not to bear properly against the inflating airbag sufficiently soon to prevent injury to the occupant. In order to address this issue, it has therefore been proposed to mount the airbag module on the inside surface of the backrest frame, in order to ensure that the inflating airbag is located closer to the occupant's torso.

However, mounting side airbag modules to the inside of a seat's backrest frame in this manner raises its own problems. One significant problem is that there is often very little space available inside the backrest frame in order to accommodate a side airbag module. This can make it impossible to mount a side airbag module in this manner for some seats, such as compact "sports seats" as are now becoming increasing popular. Furthermore, even in a seat arrangement which does have sufficient space to accommodate an inboard-mounted side airbag module in this manner, the resulting seat arrangement can sometimes be rather less comfortable for the seat occupant than a more conventional outboard-mounted arrangement, due to the proximity of the airbag module to the occupant and the resulting reduction in space for cushioning upholstery in the side bolster of the seat.

EP 2 567 870 A1 discloses a vehicle seat with an airbag unit. WO 2010/007055 A1 discloses a vehicle seat arrangement and airbag arrangement for a motor vehicle and a method for protecting a vehicle occupant.

GB 2397047 shows a vehicle seat according to the preamble of claim 1.

It is an object of the present invention to provide an improved airbag unit of a type which is mounted to a vehicle seat.

According to the present invention, there is provided a vehicle seat with an airbag unit, the seat having a squab and a backrest, the backrest having a frame covered with upholstery; wherein the airbag unit comprises: an inflatable airbag having a main panel of flexible material and an inlet connected to an inflator to inflate the airbag; the airbag unit being mounted to the backrest frame with the inflator positioned to direct inflating gas into the airbag in a generally forward direction relative to the backrest, the airbag unit being characterised in that the inflator is mounted to the frame at a position inboard of part of the frame; the airbag is rolled and/or folded into an airbag package positioned on an opposing outboard side of said part of the frame and generally adjacent an outer side face of said part; and the airbag package is fluidly connected to the inlet of the airbag by a connecting region of the airbag which extends around a front region of said part of the frame; the airbag thus being arranged for inflation upon actuation of the inflator via inwards and forwards movement of the airbag relative to the backrest frame into a deployed position in which the airbag extends generally forwardly from the inflator; the airbag further incorporating a protective panel arranged such that at least part of the protective panel: i) lies between the airbag package and the backrest frame, and/or ii) lies between the connecting region of the airbag and the backrest frame, the protective panel thereby providing protection to said main panel from damage arising from contact with the backrest frame .

Preferably, said protective panel is arranged to lie against the main panel of the airbag.

Advantageously, said protective panel is formed of fabric.

Conveniently, said protective panel is formed integrally with the airbag via a one-piece weaving technique.

Preferably, said protective panel is attached to or against the main panel of the airbag.

Advantageously, the protective panel is stitched to the main panel of the airbag.

Conveniently, the protective panel is incorporated in a structural seam of the airbag.

Preferably, the protective panel has at least one integrally formed mount configured for releasable connection to the backrest frame.

Advantageously, the or each said mount is provided in the form of a fabric mounting tab.

Preferably, the or each fabric mounting tab incorporates a predefined split-line configured to rupture and release the mounting tab from the protective panel upon inflation of the airbag.

Preferably, the airbag is arranged for inflation via inwards movement of said connecting region, away from said front region of the backrest frame.

Advantageously, said inflator comprises at least one mounting stud received through a respective mounting aperture formed in the airbag in the region of said inlet and which is connected to said part of the frame, the protective panel being configured to overlie an end of the or each mounting stud to protect the main panel from rupture by the or each stud.

Conveniently, the or each said mounting stud extends through said part of the frame from the inboard side to the outboard side and terminates with an outboard end which is covered by said protective panel.

Preferably, said airbag comprises a plurality of inflatable chambers arranged in fluid communication.

Advantageously, said airbag incorporates in internal baffle dividing the airbag into a first chamber proximal to the inflator, and a second chamber distal to the inflator, the baffle being configured to permit a restrained flow of inflating gas from the first chamber to the second chamber.

So that the invention may be more readily understood, and so that further features thereof may be appreciated, embodiments of the invention will now be described by way of example with reference to the accompanying drawings in which:
Figure 1 is a schematic side view of a vehicle seat in accordance with a first embodiment of the present invention;
Figure 2 is a sectional view taken along line A-A in figure 1, illustrating one side part of the backrest of the seat;
Figure 3 is a plan view from above of an airbag forming part of the present invention, showing the airbag laid out flat and uninflated;
Figure 4 is a side view, showing the airbag packaged into a package and mounted to part of a backrest frame of the seat;
Figure 5 is a view corresponding generally to that of figure 2, but illustrating the arrangement at a stage during deployment of an airbag unit provided in the seat;
Figure 6 is a view similar to that of figure 4, but which shows the airbag in an inflated, deployed condition relative to the backrest frame;
Figure 7 is a schematic side view of an alternative airbag suitable for use in the present invention; and
Figure 8 is a schematic side view of another alternative airbag suitable for use in the present invention, the airbag representing a modification of the one shown in figure 7.

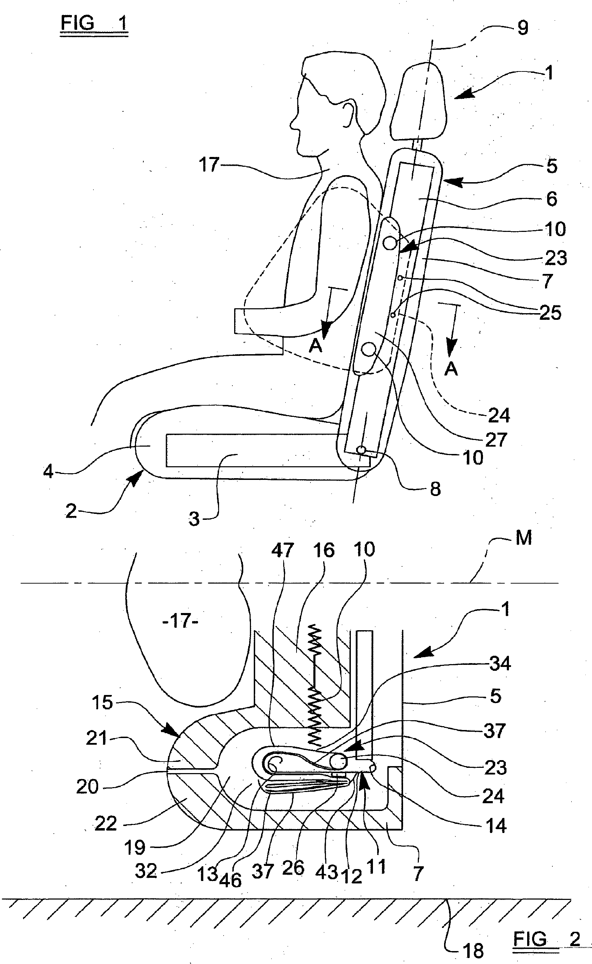

Referring initially to figures 1 and 2 of the accompanying drawings, a vehicle seat 1 in accordance with the present invention is illustrated. The seat has a squab 2 comprising a squab frame 3 which is covered by squab upholstery 4. Extending upwardly and slightly rearwardly from the rear part of the squab 2 is a backrest 5 which comprises a backrest frame 6 covered with backrest upholstery 7. The lowermost part of the backrest frame 6 is pivotally connected at 8 to the rear part of the squab frame 3 such that the angle of inclination of the backrest relative to the squab 2 can be adjusted in a manner known per se. The backrest 5 has a major axis 9 which extends away from the squab as shown in figure 1.

The upholstery 4, 7 of the squab 2 and the backrest 5 typically comprises foam material covered with an outer covering of fabric, plastic or leather. The upholstery will also typically comprise a number of internal springs in a conventional manner, such as spring 10 illustrated schematically in figure 2.

As illustrated most clearly in figure 2, the frame 6 of the backrest 5 comprises a pair of spaced-apart structural metal beams 11 (only one such beam 11 being illustrated in figure 2), each of which extends along a respective side region of the backrest 5 so as to lie substantially parallel to the major axis 9 of the backrest. Each beam 11 comprises a generally planar side plate 12 having inwardly rolled front and rear edge regions 13, 14. As will thus be appreciated, the front edge 13 of the beam 11 thus defines a smooth arcuate profile (which may be of tighter radius than illustrated). The rear edge 14 of the beam defines a similar profile, although this is not considered so important to operation of the airbag arrangement of the invention. It should be noted that other configuration of side beams 11 could be used instead of the particular form of beam shown in figure 2. However, it is considered preferable for the side beam 11 to have a front edge region with an arcuate or otherwise smooth profile of a type similar to that illustrated in figure 2, for reasons which will be explained in more detail below.

As illustrated most clearly in figure 2, the upholstery of the backrest is wrapped around the frame 6 so as to define a bolster 15 at each side of the backrest (only one such bolster 15 being illustrated in figure 2). Each bolster 15 extends forwardly of the central region 16 of the backrest so as to be located adjacent the side of an occupant 17 sitting in the seat, thus providing lateral support. The bolster 15 illustrated in figure 2 is the outboard bolster 15 of the seat and hence extends part-way between the seat occupant 17 and the adjacent side of the motor vehicle 18.

In the region of the outboard bolster 15 illustrated in figure 2, there is provided a cavity 19 in the upholstery 7 of the backrest, within which the beam 11 is received. In the forwardmost region of the cavity 19, along the front of the bolster 15, there is provided a pre-defined break-line 20 in the upholstery, along which the immediately adjacent regions of the upholstery 21, 22 are releasably secured to one another in a manner known per se, for example, using fabric hook-and-loop type fasteners such as that sold under the well known Trade Mark VELCRO.

An airbag module or unit 23 is provided within the upholstery 7 of the backrest 5, and is mounted to the beam 11 within the cavity 19. As illustrated in figure 1, the airbag unit 23 is generally elongate and is orientated such that it is substantially parallel to the major axis 9 of the backrest 5 extending away from the squab 2. The airbag unit 23 includes an inflator 24 such as, for example, a gas generator. The inflator 24 is of cylindrical and elongate form and is located generally centrally along the length of the airbag unit 23. The inflator is securely mounted to the inboard side of the side plate 12 of the backrest frame 6 via a pair of spaced apart mounting studs 25 which are received through respective cooperating mounting apertures formed in the side plate 12 so as to terminate with respective outboard ends 26. As will be seen from figure 2, the inflator 24 is secured to the rear half of the beam 11, in a position spaced rearwardly of the internal upholstery springs 10 extending across the central region 16 of the backrest. As illustrated in figure 1, the inflator 24 is positioned vertically along the backrest frame 6 so as to be located between adjacent upholstery springs 10.

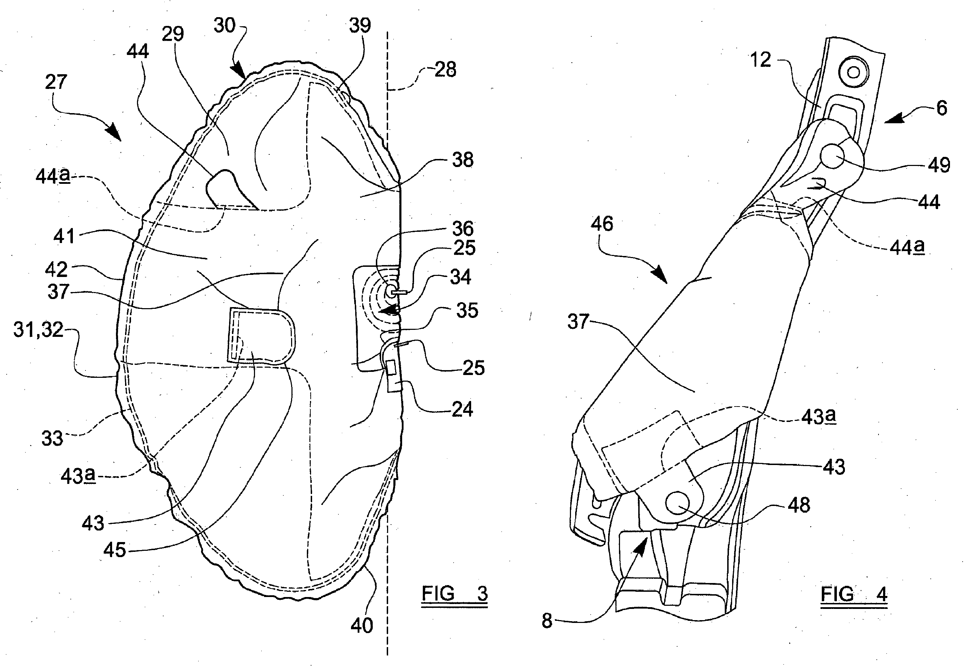

The airbag unit 23 also comprises an inflatable airbag 27 which is preferably made from fabric material and which is connected to the inflator 24 such that the inflator will direct a volume of inflating gas into the interior volume of the airbag 27. An exemplary airbag 27 is shown in figure 3, and it will be seen that the airbag has a generally triangular shape when laid out flat in its uniflated condition. The airbag 27 is preferably formed from a generally symmetrical sheet of flexible fabric material which is folded in half about a notional fold line 28 to form two generally identical superimposed fabric panels 29, 30 which are then interconnected around their aligned peripheral edges 31, 32 by a peripheral structural seam 33 so as to define an inflatable chamber between the two panels. Alternatively, the airbag 27 may be formed from two generally identical sheets of fabric which are superimposed on one another, such that each defines a respective panel 29, 30, and interconnected around their aligned peripheral edges 31, 32 by a peripheral structural seam which extends all the way around the panels.

The configuration of airbag 27 illustrated in figure 3 has a relatively wide gas inlet portion 34 which defines an inlet for the inflating gas, and which is connected to the inflator 24. More particularly, inlet region 34 of the airbag may be provided with an aperture 35 through which the inflator 24 may be inserted into the inlet region of the airbag prior to connection to the beam 11, and a mounting aperture 36 arranged to receive a mounting stud 25 of the inflator for mutual connection of the inflator and the airbag to the inboard side of the beam 11 of the backrest frame 6. This connection of the airbag 27 to the inboard side of the beam 11 is shown most clearly in figure 2, where it can be seen that the fabric of the airbag 27 becomes trapped between the inflator 24 and the side surface of the beam 11 when the inflator is mounted in position.

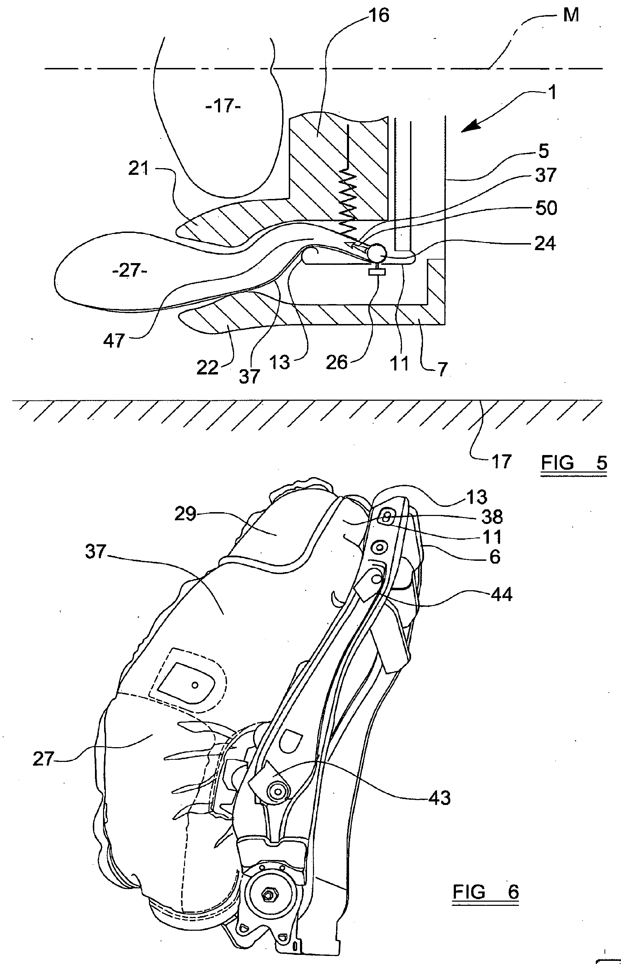

Additionally, the airbag incorporates a protective panel 37 which, as will be described below in more detail, is arranged to protect the fabric panels 29, 30 of the airbag 27 from damage during storage and inflation. The protective panel 37 is arranged to lie mainly against one of the main panels 29, 30 of the airbag 27. In the arrangement illustrated, the protective panel 37 is arranged to lie against the uppermost main panel 29 (as viewed in plan view in figure 5), which will come to represent the outboard panel of the airbag when the airbag installed in the seat and inflated.

In the particular arrangement illustrated, the protective panel 37 is formed from similar fabric material as the two main panels 29, 30 of the airbag and has a generally T-shaped configuration. As viewed in figure 3, it will be seen that the T-shaped protective panel 37 thus defines a long region or limb 38 which substantially covers the entire vertical extent of the inlet region 34 of the airbag with top and bottom edges 39, 40 which overlie respective regions of the peripheral edges 31, 32 of the two main airbag panels 31, 32, and a relatively short region or limb 41 which extends forwardly and terminates in a front edge 42 which overlies the forwardmost region of the peripheral edges 31, 32 of the two main airbag panels 29, 30. The protective panel may be attached to the airbag 27 by lines of stitching along each of its edges 39, 40, 42. However, in a preferred arrangement, the three edges 39, 40, 42 of the protective panel may be incorporated into the structural peripheral seam 33 of the airbag which interconnects the two main panels 29, 30 of the airbag.

The protective panel 37 also wraps around the rear of the airbag as viewed in figure 3 such that it also covers a small area of the opposite (lowermost as viewed in figure 3) panel 30, for example generally surrounding the inlet region 35 of the airbag, which will come to represent the inboard panel of the airbag when the airbag is installed in the seat and inflated.

Although the protective panel 37 is described above as being formed as a separate fabric sheet, it is to be appreciated that in variants of the invention the protective panel 37 could be woven simultaneously with the two main panels 29, 30 of the airbag via a so-called one-piece weaving technique, of a type known *per se,* in which yarns of the three panels are selectively interwoven to define an interconnecting structural seam similar to the peripheral seam 33 illustrated but which is woven integrally into the structure of the three panels.

The protective panel 37 may furthermore be provided with one or more mounting tabs, such as the pair of mounting tabs 43, 44 illustrated in figure 3. The mounting tabs 43, 44 can take one of a number of different configurations. For example, the lower tab 43 illustrated in figure 3 takes the form of a small flap of fabric which is cut from the rest of the protective panel 37 via a peripheral cut 45 in a manner such that the flap remains integral with the protective panel 37 along a notional fold line. The upper tab 44 illustrated in figure 3 has a similar shape to the lower tab 43 but is formed as a tab of fabric which projects outwardly from the edge of the relatively short region or limb 41 of the panel.

Each of the mounting tabs 43, 44 is preferably configured so as to incorporate a predefined split-line 43a, 44a running across its entire width.

As illustrated in figure 2, the airbag 27 is initially provided in a packaged condition, in which it is folded and/or rolled into a package 46, which is located on the outboard side of the beam 11, generally adjacent the outer side face of the side plate 12. In further detail, it will be noted that the folded package 46 is fluidly connected to the inlet region 34 of the airbag via a connecting region 47 of the airbag which extends forwardly from the inlet region 34 and the inflator 24, and which extends around the smooth arcuate front edge region 13 of the beam 11. It will thus be noted that the folded airbag package 46, which represents the bulk of the airbag, is located on the outboard side of the beam 11, whereas the inflator 24 is located on the inboard side. The smooth arcuate profile of the front edge region 13 of the side beam is intended to lessen the likelihood of the fabric of the airbag snagging or catching on the backrest frame which could damage the integrity of the airbag. However, the protective panel 37 provides significant further protection in this respect. As shown in figure 2, the protective panel 37 is arranged to lie between the airbag package 46 and the outboard side of the beam 11, and also so as to lie between the connecting region 47 of the airbag and the front region 13 of the beam 11. The protective panel 37 is thus configured to provide protection to the outboard main panel 29 of the airbag from damage arising from contact with the backrest frame of the seat, and also from contact with the outboard ends 26 of the inflator mounting studs 25.

The small region of the protective panel 37 which warps around to the inboard side of the airbag in the region of the inflator 24 provides protection to the inboard main panel 30 of the airbag from damage arising from contact with the springs 10 of the seat upholstery.

Figure 4 shows the airbag package 46 as viewed from the outboard side of the backrest frame 6. As illustrated, the two mounting tabs 43, 44 of the protective panel 37 are each secured to the outer face of the frame side plate 12, by respective fixings 48, 49. The fixings48, 49 may be formed of plastic and may each be frangible, breakable, or otherwise releasably connected to the backrest frame 6 for disconnection therefrom upon inflation of the airbag 27. However, in the preferred arrangement in which the mounting tabs 43, 44 each incorporate a transverse split-line 43a, 44a, the fixings 48, 49 are instead preferably fixedly connected to the backrest frame, such that the mounting tabs 43, 44 will instead become detached along their split lines 43a, 44a upon inflation of the airbag. As can be seen from figure 4, the protective panel 37 and its two mounting tabs 43, 44 serve to retain the airbag package 46 in a predefined shape and position relative to the backrest frame, thereby obviating the need for a separate airbag cover of the type sometimes used in other side airbag arrangements.

Turning now to consider figure 5, actuation of the airbag unit 23 described above will now be explained. Upon actuation of the airbag unit 23, for example when an ignition signal indicative of an imminent or extant crash situation is received from a crash sensor, the inflator 24 is actuated, which serves to direct a large volume of inflating gas into the airbag 27 in a generally forward direction relative to the backrest 5, as indicated schematically by arrow 50 in figure 5. This causes the airbag 27, and in particular the folded package 46 to inflate and unfold, from the outboard side of the beam 11 in a generally forwards direction relative to the backrest 5 of the seat.

As it inflates and thus increases in physical size, the airbag 27 either breaks the fixings 48, 49,pulls them from engagement with the backrest frame 6 (depending upon the particular configuration of the fixings 48, 49), or rips the mounting tabs 43, 44 free via their split-lines 43a, 44a, thereby releasing airbag from the outboard side of the backrest frame. This releases the package,46 for further inflation and the airbag then bursts through the break line 20 formed in the front region of the bolster upholstery so as to urge the regions 21, 22 of the upholstery immediately adjacent the break line apart as shown in figure 5. Throughout inflation of the airbag 27 in this manner, the protective panel 37 serves to protect the outboard main panel 29 of the airbag from damage via contact with the backrest frame and/or the outboard ends of the inflator mounting studs 26.

Figure 6 depicts the airbag 27 in a fully inflated condition relative to the backrest frame 6, with the seat upholstery removed, and in particular shows how the long vertical region or limb 38 of the protective panel 37 provides protection to the underlying outboard main panel 29 along the entire extent of the front edge 13 of the side beam 11 of the frame.

Returning now to consider figure 5, it is to be noted that the airbag is shown during an early stage of inflation following bursting of the bolster upholstery. It will be seen from this drawing that as the airbag 27 inflates it moves inwards and forwards relative to the backrest frame, unwrapping itself from around the front edge region 13 of the frame 6. More particularly, it will be noted that the connecting region 47 of the airbag which fluidly connects the its inlet 34 to the main packaged part 46 moves inwardly away from the arcuate curved region of the backrest frame.

Ultimately, when substantially fully inflated the airbag adopts a deployed position as shown schematically in phantom in figure 1, in which it extends generally forwardly from the inflator 24 so as to provide side protection to the torso of the seat occupant 17. However, it is to be appreciated that in other embodiments the airbag 27 can have a slightly different configuration so as to provide protection to the occupant's pelvic region instead of or in addition to his or her torso.

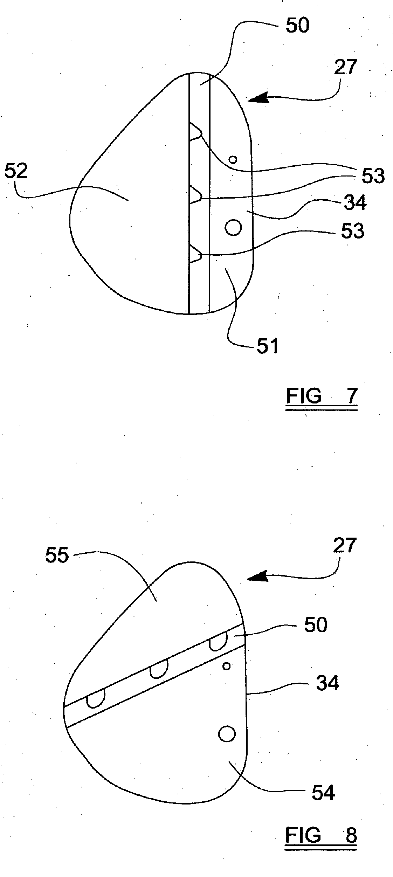

Figures 7 and 8 illustrate two possible alternative configurations for the airbag 27. In both cases the protective panel 37 is omitted for clarity. In figure 7, the airbag 26 is provided with an internal baffle 50 which is preferably formed as a strip of fabric and which extends vertically (in the orientation of the airbag illustrated) and which is connected between the opposing main panels 29, 30 of the airbag, internally of the airbag. The baffle 50 thus divides the interior volume of the airbag into two inflatable chambers, namely: a proximal chamber 51 located adjacent the inlet region 34 and in direct fluid communication with the inlet of the airbag; and a distal chamber 52 spaced from the inlet region 34 by the proximal chamber 51. The baffle 50 has a plurality of flow ports 53 providing fluid communication between the two chambers. As will be noted, however, the total area of the flow ports 53 is relatively small in comparison to the overall area of the baffle.

The baffle 50 thus serves to permit only a restrained flow of inflating gas to flow from the proximal chamber 51, through the flow ports 53 and into the distal chamber 52. Upon actuation of the inflator 24, the internal gas pressure inside the proximal chamber 51 thus rises significantly faster than the internal gas pressure inside the distal chamber 52. This inflation characteristic is desirable because it helps to ensure that the inflating airbag bursts quickly through the upholstery of the side bolster 15, whereupon the outer, initially folded/rolled region of the airbag 46 can unfurl/unfold without becoming fouled by the upholstery.

As will be noted, in the arrangement of figure 7, the baffle 50 is positioned in the connecting region 47 of the airbag.

The airbag shown in figure 8 has a similar baffle arrangement. However, in this arrangement the baffle runs diagonally across the airbag so as to divide it into a lower proximal chamber 54 and an upper distal chamber 55. This alternative baffle orientation will have the effect of concentrating the initial inflation effect of the inflating gas towards the inner and lower region of the airbag, ensuring that airbag first bursts through a lower region of the bolster upholstery of the seat, which of course is spaced furthest from the occupant's torso.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A vehicle seat (1) with an airbag unit (23), the seat having a squab (2) and a backrest (5), the backrest having a frame (6) covered with upholstery (7); wherein the airbag unit (23) comprises: an inflatable airbag (27) having a main panel (29) of flexible material and an inlet (34) connected to an inflator (24) to inflate the airbag; the airbag unit being mounted to the backrest frame (6) with the inflator (24) positioned to direct inflating gas into the airbag in a generally forward direction relative to the backrest (5), the inflator (24) is mounted to the frame (6) at a position inboard of part (11) of the frame; the airbag unit (23) being **characterised in that** the airbag is rolled and/or folded into an airbag package (46) positioned on an opposing outboard side (12) of said part (11) of the frame and generally adjacent an outer side face (12) of said part (11); and the airbag package (46) is fluidly connected to the inlet (34) of the airbag by a connecting region (47) of the airbag which extends around a front region (13) of said part of the frame (11); the airbag (27) thus being arranged for inflation upon actuation of the inflator (24) via inwards and forwards movement of the airbag (27) relative to the backrest frame (6) into a deployed position in which the airbag (27) extends generally forwardly from the inflator (24); the airbag (27) further incorporating a protective panel (37) arranged such that at least part of the protective panel (37): i) lies between the airbag package (46) and the backrest frame (6), and/or ii) lies between the connecting region (47) of the airbag and the backrest frame (6), the protective panel (37) thereby providing protection to said main panel (29) from damage arising from contact with the backrest frame (6).

2. A vehicle seat (1) according to claim 1, wherein said protective panel (37) is arranged to lie against the main panel (29) of the airbag.

3. A vehicle seat (1) according to claim 1 or claim 2, wherein said protective panel (37) is formed of fabric.

4. A vehicle seat (1) according to claim 3, wherein said protective panel (37) is formed integrally with the airbag (27) via a one-piece weaving technique.

5. A vehicle seat (1) according to any preceding claim, wherein said protective panel (37) is attached to or against the main panel (29) of the airbag.

6. A vehicle seat (1) according to claim 5, wherein the protective panel (37) is stitched to the main panel (29) of the airbag (27).

7. A vehicle seat (1) according to claim 5 or claim, 6, wherein the protective panel (37) is incorporated in a structural seam (33) of the airbag.

8. A vehicle seat (1) according to any preceding claim, wherein the protective panel (37) has at least one integrally formed mount (43, 44) configured for releasable connection to the backrest frame (6).

9. A vehicle seat (1) according to claim 8, wherein the or each said mount (43, 44) is provided in the form of a fabric mounting tab.

10. A vehicle seat (1) according to claim 9, wherein the or each fabric mounting tab incorporates a predefined split-line (43a, 44a) configured to rupture and release the mounting tab from the protective panel (37) upon inflation of the airbag.

11. A vehicle seat (1) according to any preceding claim, wherein the airbag (27) is arranged for inflation via inwards movement of said connecting region (47), away from said front region (13) of the backrest frame (6).

12. A vehicle seat (1) according to any preceding claim, wherein said inflator (24) comprises at least one mounting stud (25) received through a respective mounting aperture (36) formed in the airbag (27) in the region of said inlet (34) and which is connected to said part (11) of the frame, the protective panel (37) being configured to overlie an end (26) of the or each mounting stud (25) to protect the main panel (29) from rupture by the or each stud (25).

13. A vehicle seat (1) according to claim 12, wherein the or each said mounting stud (25) extends through said part of the frame (6) from the inboard side to the outboard side and terminates with an outboard end (26) which is covered by said protective panel (37).

14. A vehicle seat according to any preceding claim, wherein said airbag (27) incorporates in internal baffle (50) dividing the airbag into a first chamber (51) proximal to the inflator (24), and a second chamber (52) distal to the inflator (24), the baffle (50) being configured to permit a restrained flow of inflating gas from the first chamber (51) to the second chamber (52).

## Patentansprüche

1. Fahrzeugsitz (1) mit einer Airbageinheit (23), wobei der Sitz eine Sitzfläche (2) und eine Lehne (5) aufweist, wobei die Lehne einen Rahmen (6) aufweist, der mit einer Polsterung (7) versehen ist; wobei die Airbageinheit (23) Folgendes umfasst: einen füllbaren Airbag (27) mit einer Hauptbahn (29) aus flexiblem Material und einer Einströmöffnung (34), die mit einem Gasgenerator (24) verbunden ist, damit der Airbag gefüllt wird; wobei die Airbageinheit am Lehnenrahmen (6) befestigt ist, wobei der Gasgenerator (24) so platziert ist, dass er in einer allgemein vorwärts gerichteten Richtung bezogen auf die Lehne (5) Füllgas in den Airbag leitet, der Gasgenerator (24) an einer Position innenliegend zu dem Teil (11) des Rahmens am Rahmen (6) befestigt ist; wobei die Airbageinheit (23) **dadurch gekennzeichnet ist, dass** der Airbag zu einem Airbagpaket (46) zusammengerollt und/oder -gefaltet ist, das an einer gegenüberliegenden außenliegenden Seite (12) des Teils (11) des Rahmens und allgemein angrenzend an einer Außenseitenfläche (12) des Teils (11) platziert ist; und das Airbagpaket (46) mit der Einströmöffnung (34) des Airbags über einen Verbindungsbereich (47) des Airbags fluidverbunden ist, der um einen vorderen Bereich (13) des Teils des Rahmens (11) verläuft; sodass der Airbag (27) bei Betätigung des Gasgenerators (24) über eine Einwärts- und Vorwärtsbewegung des Airbags (27) bezogen auf den Lehnenrahmen (6) zum Befüllen in eine entfaltete Position hinein angeordnet ist, in der der Airbag (27) vom Gasgenerator (24) aus allgemein nach vorn verläuft; wobei der Airbag (27) ferner eine Schutzbahn (37) aufweist, die so angeordnet ist, dass zumindest ein Teil der Schutzbahn (37): i) zwischen dem Airbagpaket (46) und dem Lehnenrahmen (6) liegt, und/oder ii) zwischen dem Verbindungsbereich (47) des Airbags und dem Lehnenrahmen (6) liegt, wodurch die Schutzbahn (37) die Hauptbahn (29) vor Schäden schützt, die von der Berührung mit dem Lehnenrahmen (6) herrühren.

2. Fahrzeugsitz (1) nach Anspruch 1, wobei die Schutzbahn (37) so angeordnet ist, dass sie an der Hauptbahn (29) des Airbags anliegt.

3. Fahrzeugsitz (1) nach Anspruch 1 oder Anspruch 2, wobei die Schutzbahn (37) aus Gewebe geformt ist.

4. Fahrzeugsitz (1) nach Anspruch 3, wobei die Schutzbahn (37) mit dem Airbag (27) über ein Einteilwebverfahren einteilig ausgebildet ist.

5. Fahrzeugsitz (1) nach einem vorhergehenden Anspruch, wobei die Schutzbahn (37) an der Hauptbahn (29) des Airbags oder daran anliegend befestigt ist.

6. Fahrzeugsitz (1) nach Anspruch 5, wobei die Schutzbahn (37) an der Hauptbahn (29) des Airbags (27) angenäht ist.

7. Fahrzeugsitz (1) nach Anspruch 5 oder Anspruch 6, wobei die Schutzbahn (37) in einer Strukturnaht (33) des Airbags aufgenommen ist.

8. Fahrzeugsitz (1) nach einem vorhergehenden Anspruch, wobei die Schutzbahn (37) mindestens eine einteilig ausgebildete Halterung (43, 44) aufweist, die für eine lösbare Verbindung mit dem Lehnenrahmen (6) ausgelegt ist.

9. Fahrzeugsitz (1) nach Anspruch 8, wobei die oder jede Halterung (43, 44) in Form einer Gewebebefestigungslasche vorgesehen ist.

10. Fahrzeugsitz (1) nach Anspruch 9, wobei die oder jede Gewebebefestigungslasche eine vorgegebene Sollbruchlinie (43a, 44a) aufweist, die so ausgelegt ist, dass sie beim Füllen des Airbags reißt und sich die Befestigungslasche von der Schutzbahn (37) löst.

11. Fahrzeugsitz (1) nach einem vorhergehenden Anspruch, wobei der Airbag (27) zum Befüllen über eine Einwärtsbewegung des Verbindungsbereichs (47) weg von dem vorderen Bereich (13) des Lehnenrahmens (6) angeordnet ist.

12. Fahrzeugsitz (1) nach einem vorhergehenden Anspruch, wobei der Gasgenerator (24) mindestens einen Befestigungsbolzen (25) umfasst, der durch eine jeweilige im Airbag (27) im Bereich der Einströmöffnung (34) ausgebildete Befestigungsöffnung (36) hindurch aufgenommen ist und mit dem Teil (11) des Rahmens verbunden ist, wobei die Schutzbahn (37) so ausgelegt ist, dass sie über einem Ende (26) des oder jedes Befestigungsbolzens (25) liegt, damit die Hauptbahn (29) vor einem Zerreißen durch den oder jeden Bolzen (25) geschützt ist.

13. Fahrzeugsitz (1) nach Anspruch 12, wobei der oder jeder Befestigungsbolzen (25) durch den Teil des Rahmens (6) von der innenliegenden Seite zur außenliegenden Seite verläuft und mit einem außenliegenden Ende (26) endet, das von der Schutzbahn (37) bedeckt ist.

14. Fahrzeugsitz nach einem vorhergehenden Anspruch, wobei der Airbag (27) ein inneres Leitelement (50) aufweist, das den Airbag in eine erste Kammer (51) proximal zum Gasgenerator (24) und eine zweite Kammer (52) distal zum Gasgenerator (24) unterteilt, wobei das Leitelement (50) so ausgelegt ist, dass es Füllgas eingeschränkt aus der ersten Kammer (51) in die zweite Kammer (52) strömen lässt.

## Revendications

1. Siège de véhicule (1) comprenant une unité d'airbag (23), le siège comportant un coussin (2) et un dossier (5), le dossier comportant un cadre (6) recouvert de garnissage (7) ; dans lequel l'unité d'airbag (23) comprend : un airbag gonflable (27) comportant un panneau principal (29) en matériau flexible et un orifice d'entrée (34) relié à un gonfleur (24) afin de gonfler l'airbag ; l'unité d'airbag étant montée sur le cadre de dossier (6) avec le gonfleur (24) positionné de manière à diriger du gaz de gonflage dans l'airbag dans une direction globalement vers l'avant par rapport au dossier (5), le gonfleur (24) étant monté sur le cadre (6) dans une position côté milieu du véhicule d'une partie (11) du cadre ; l'unité d'airbag (23) étant **caractérisée en ce que** l'airbag est enroulé et/ou plié en un paquet d'airbag (46) positionné sur un côté portière opposé (12) de ladite partie (11) du cadre et globalement adjacent à une face latérale extérieure (12) de ladite partie (11) ; et le paquet d'airbag (46) est en liaison fluidique avec l'orifice d'entrée (34) de l'airbag par une zone de liaison (47) de l'airbag qui s'étend autour d'une zone avant (13) de ladite partie du cadre (11) ; l'airbag (27) étant ainsi agencé de manière à être gonflé lors de l'actionnement du gonfleur (24) par le biais d'un mouvement vers l'intérieur et vers l'avant de l'airbag (27) par rapport au cadre de dossier (6) dans une position déployée dans laquelle l'airbag (27) s'étend globalement vers l'avant depuis le gonfleur (24) ; l'airbag (27) comprenant en outre un panneau de protection (37) agencé de telle manière qu'au moins une partie du panneau de protection (37) : i) se trouve entre le paquet d'airbag (46) et le cadre de dossier (6) et/ou ii) se trouve entre la zone de liaison (47) de l'airbag et le cadre de dossier (6), le panneau de protection (37) assurant ainsi la protection dudit panneau principal (29) contre des dommages résultant du contact avec le cadre de dossier (6).

2. Siège de véhicule (1) selon la revendication 1, dans lequel ledit panneau de protection (37) est agencé pour se trouver contre le panneau principal (29) de l'airbag.

3. Siège de véhicule (1) selon la revendication 1 ou la revendication 2, dans lequel ledit panneau de protection (37) est constitué de tissu.

4. Siège de véhicule (1) selon la revendication 3, dans lequel ledit panneau de protection (37) est formé d'un seul tenant avec l'airbag (27) par une technique de tissage d'une seule pièce.

5. Siège de véhicule (1) selon l'une quelconque des revendications précédentes, dans lequel ledit panneau de protection (37) est fixé au panneau principal (29) de l'airbag ou contre celui-ci.

6. Siège de véhicule (1) selon la revendication 5, dans lequel ledit panneau de protection (37) est cousu au panneau principal (29) de l'airbag (27).

7. Siège de véhicule (1) selon la revendication 5 ou la revendication 6, dans lequel le panneau de protection (37) est incorporé dans une couture structurelle (33) de l'airbag.

8. Siège de véhicule (1) selon l'une quelconque des revendications précédentes, dans lequel le panneau de protection (37) comporte au moins un élément de fixation (43, 44) formé d'un seul tenant, configuré pour la liaison amovible avec le cadre de dossier (6).

9. Siège de véhicule (1) selon la revendication 8, dans lequel le ou chaque élément de fixation (43, 44) se présente sous la forme d'une languette de fixation en tissu.

10. Siège de véhicule (1) selon la revendication 9, dans lequel la ou chaque languette de fixation en tissu comprend une ligne de division prédéfinie (43a, 44a) configurée pour se rompre et libérer la languette de fixation du panneau de protection (37) lors du gonflage de l'airbag.

11. Siège de véhicule (1) selon l'une quelconque des revendications précédentes, dans lequel l'airbag (27) est agencé pour le gonflage par le biais d'un mouvement vers l'intérieur de ladite zone de liaison (47), qui s'éloigne de ladite zone avant (13) du cadre de dossier (6).

12. Siège de véhicule (1) selon l'une quelconque des revendications précédentes, dans lequel ledit gonfleur (24) comprend au moins une tige de fixation (25) reçue à travers une ouverture de fixation (36) respective formée dans l'airbag (27) dans la zone dudit orifice d'entrée (34) et qui est reliée à ladite partie (11) du cadre, le panneau de protection (37) étant configuré pour recouvrir une extrémité (26) de la ou de chaque tige de fixation (25) afin de protéger le panneau principal (29) contre une rupture par la ou chaque tige (25).

13. Siège de véhicule (1) selon la revendication 12, dans lequel la ou chaque tige de fixation (25) s'étend à travers ladite partie du cadre (6) du côté milieu de véhicule au côté portière et se termine par une extrémité côté portière (26) qui est recouverte par ledit panneau de protection (37).

14. Siège de véhicule selon l'une quelconque des revendications précédentes, dans lequel ledit airbag (27) comprend une cloison intérieure (50) qui divise l'airbag en une première chambre (51) proximale par rapport au gonfleur (24) et une seconde chambre (52) distale par rapport au gonfleur (24), la cloison (50) étant configurée pour permettre un écoulement limité de gaz de gonflage de la première chambre (51) à la seconde chambre (52).
